## Europäisches Patentamt

## European Patent Office

## Office européen des brevets

(19)

(11) Veröffentlichungsnummer: **0 215 271**
**B1**

(12) **EUROPÄISCHE PATENTSCHRIFT**

(45) Veröffentlichungstag der Patentschrift:
04.04.90

(51) Int. Cl.⁴: **G05B 19/405**

(21) Anmeldenummer: **86110815.7**

(22) Anmeldetag: **05.08.86**

(54) **Geschwindigkeitsüberwachungssystem für Industrieroboter oder dergleichen.**

(30) Priorität: **19.08.85 DE 3529609**

(43) Veröffentlichungstag der Anmeldung:
**25.03.87 Patentblatt 87/13**

(45) Bekanntmachung des Hinweises auf die Patenterteilung:
**04.04.90 Patentblatt 90/14**

(84) Benannte Vertragsstaaten:
**CH DE FR GB IT LI SE**

(56) Entgegenhaltungen:
**EP-A- 0 067 877**
**EP-A- 0 130 570**
**US-A- 3 920 972**
**US-A- 4 205 308**
**US-A- 4 409 650**
**US-A- 4 529 921**

(73) Patentinhaber: **Siemens Aktiengesellschaft,
Wittelsbacherplatz 2, D-8000 München 2(DE)**

(72) Erfinder: **Bleidorn, Werner-Wilhelm, Dipl.-Ing., 15, Hulton
Close Mossley, Congleton Cheshire CW12 3CF(GB)**
Erfinder: **Krause, Norbert, Dipl.-Ing., Heppenheimer
Strasse 24, D-8526 Bubenreuth(DE)**

ACTORUM AG

## Beschreibung

Die Erfindung bezieht sich auf ein Geschwindigkeitsüberwachungssystem für Industrieroboter oder dergleichen, bei denen die Robotersteuerung einen in raumfesten Koordinaten vorgegebenen Geschwindigkeitssollwert des Roboters in achsspezifische Sollwertbefehle für die einzelnen Achsantriebe des Roboters transformiert und bei dem Mittel vorgesehen sind, um bei Überschreiten einer maximal zulässigen Bewegungsgeschwindigkeit des Roboters die Antriebe stillzusetzen.

Bei Industrierobotern muß vor allem bei Programmierarbeiten oder Testarbeiten im Arbeitsbereich sichergestellt sein, daß Geschwindigkeiten über 25 cm pro Sekunde nicht überschritten werden können. Dies muß vor allem auch für den Fall gelten, daß zwar die vorgegebene Geschwindigkeit nicht diesen kritischen Wert überschreitet, aber infolge von Störungen oder Fehlberechnungen innerhalb der Steuerung sich Werte ergeben, die deutlich über diesen 25 cm pro Sekunde liegen.

Bei den bisher bekannten Lösungen wird hierzu entweder im Schleichgang mit verminderter Energie gearbeitet und/oder die zulässige Geschwindigkeit der einzelnen Antriebe in einzelnen Achsen überwacht. Dies kann jedoch bei einer ungünstigen Konstellation der einzelnen Achsen dazu führen, daß die resultierende Summengeschwindigkeit der Roboterspitze unzulässig hoch wird, obwohl die einzelnen Achsen relativ langsam laufen, so daß deren Sicherheitsüberwachung nicht anspricht.

Die Aufgabe der vorliegenden Erfindung besteht darin, ein Geschwindigkeitsüberwachungssystem der eingangs genannten Art so auszubilden, daß mit Sicherheit die vorgegebene Grenzgeschwindigkeit nicht durch ein Roboterteil überschritten werden kann.

Diese Aufgabe wird erfindungsgemäß dadurch gelöst, daß ein Rücktransformationsbaustein vorgesehen ist, dem die von der Robotersteuerung ausgegebenen Sollwertbefehle und die daraus resultierenden Istwerte zugeführt werden, daß die durch eine Rücktransformation auf das raumfeste Koordinatensystem bezogenen Geschwindigkeitswerte berechnet und mit der maximal zulässigen Bewegungsgeschwindigkeit verglichen werden, daß der aus den achsspezifischen Sollwertbefehlen berechnete Geschwindigkeitswert mit dem aus den achsspezifischen Istwerten berechneten Geschwindigkeitswert verglichen wird, und daß bei unzulässigen Abweichungen ein Störsignal ausgegeben wird.

Durch diese Rücktransformation auf das raumfeste Koordinatensystem kann festgestellt werden, ob irgendein Roboterteil, z.B. die Roboterspitze, einen unzulässigen Geschwindigkeitswert annimmt.

Zusätzlich zu den Geschwindigkeiten können auch die achsspezifischen Werte für Weg und/oder Beschleunigung in raumfeste Werte zurücktransformiert und mit vorgegebenen Grenzwerten verglichen werden.

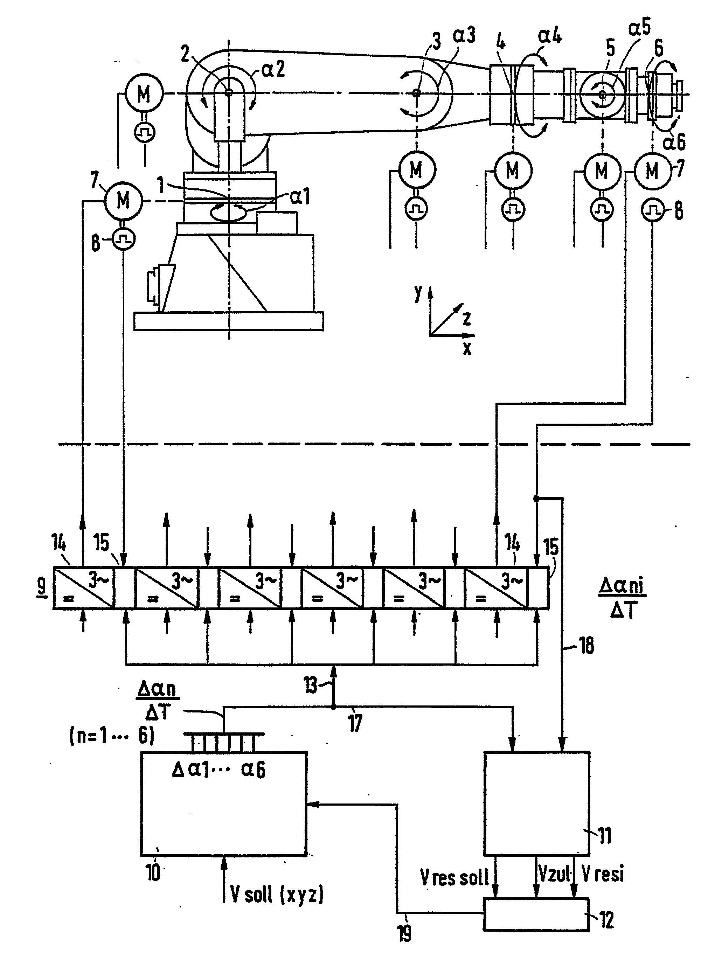

Anhand eines in der Zeichnung dargestellten Ausführungsbeispiels sei die Erfindung näher beschrieben:

In der Zeichnung ist schematisch ein Sechsachsen-Gelenkroboter mit den sechs Drehgelenken 1 bis 6 angedeutet. Durch den einzelnen Drehgelenken 1 bis 6 zugeordneten elektrische Antriebe 7 können entsprechende Drehwinkel $\alpha 1$ bis $\alpha 6$ in den einzelnen Achsen zurückgelegt werden. Die in die Robotergelenke integrierten Antriebe 7 werden von einem getrennt untergebrachten Spannungsversorgungsgerät 9 gespeist, das im Prinzip aus Wechselrichtern 14 mit einem Steuerteil 15 besteht. Dem Steuerteil 15 des jeweiligen Wechselrichters 14 werden aus der Robotersteuerung 10 die gewünschten Winkeländerungen $\Delta\alpha_n$ je Taktzeit $\Delta T$ über ein Bussystem 13 zugeführt und hieraus in Verbindung mit den von den Istwertgebern 8 stammenden Lageistwerten entsprechende Steuerbefehle für die Umrichter 14 gebildet. Der Robotersteuerung 10 selbst wird der Geschwindigkeitsvektor $V_{soll}$ (x, y, z) der Roboterspitze, und zwar bezogen auf das raumfeste Koordinatensystem xy und z vorgegeben. Die Robotersteuerung 10 berechnet daraus über eine Koordinatentransformation die für die Drehbewegungen in den einzelnen Achsen erforderlichen Geschwindigkeitswerte.

$$\frac{\Delta\alpha_n}{\Delta T}$$

(n = 1, 2, ..... 6).

Eine Robotersteuerung dieser Art ist bekannt (vergl. beispielsweise Siemens-Energietechnik 1981, Seiten 285 bis 289 oder DE-AS 25 26 504).

Zusätzlich zur bekannten Steuerung ist noch ein Rücktransformationsbaustein 11 vorgesehen, in dem die Koordinatentransformation in der entgegengesetzten Richtung durchgeführt wird. d.h. aus den achsspezifischen Werten $\alpha_n$ werden wieder auf das raumfeste Koordinatensystem xyz bezogene Werte gebildet. Hierzu werden - wie durch die Leitung 17 angedeutet - die achsspezifischen Sollwerte auch dem Rücktransformationsbaustein 11 zugeführt, der hieraus die resultierende Geschwindigkeit $V_{ressoll}$ der Roboterspitze rückberechnet. Diese Geschwindigkeit wird mit einem zulässigen Wert $V_{zul}$, z.B. 25 cm pro Sekunde, verglichen und, falls der Vergleicher 12 feststellt, daß dieser zulässige Wert überschritten ist, ein Stopsignal über die Leitung 19 an die Robotersteuerung 10 gegeben; diese veranlaßt ein sofortiges Stillsetzen sämtlicher Antriebe. Auf diese Weise können Fehler erkannt werden, die innerhalb der Robotersteuerung 10 aufgetreten sind und zu unzulässigen Geschwindigkeitswerten führen würden. Zusätzlich wird, wie durch die Linie 18 angedeutet, aus den achsspezifischen Istwerten

$$\frac{\Delta\alpha_{ni}}{\Delta T}$$

der entsprechende resultierende Geschwindigkeitsvektor $V_{ressi}$ im raumfesten Koordinatensystem xyz rückberechnet. Dieser Wert wird dann mit der zulässigen Geschwindigkeit bzw. dem resultierenden Geschwindigkeitssollwert verglichen. Auch hier wird bei Abweichungen zwischen beiden Werten, die z.B. durch Störungen in den Gebern 8 veranlaßt sind, ein Störsignal an die Robotersteuerung 10 abgegeben.

**Patentansprüche**

1. Geschwindigkeitsüberwachungssystem für Industrieroboter oder dergleichen, bei denen die Robotersteuerung einen in raumfesten Koordinaten vorgegebenen Geschwindigkeitssollwert des Roboters in achsspezifische Sollwertbefehle für die einzelnen Achsantriebe des Roboters transformiert und bei dem Mittel vorgesehen sind, um bei Überschreiten einer maximal zulässigen Bewegungsgeschwindigkeit des Roboters die Antriebe stillzusetzen, dadurch gekennzeichnet, daß ein Rücktransformationsbaustein (11) vorgesehen ist, dem die von der Robotersteuerung (10) ausgegebenen Sollwertbefehle ($\Delta\alpha_n/\Delta T$) und die daraus resultierenden Istwerte zugeführt werden, daß die durch eine Rücktransformation auf das raumfeste Koordinatensystem (x, y, z) bezogenen Geschwindigkeitswerte berechnet und mit der maximal zulässigen Bewegungsgeschwindigkeit ($V_{zul}$) verglichen werden, daß der aus den achsspezifischen Sollwertbefehlen ($\Delta\alpha_n/\Delta T$) berechnete Geschwindigkeitswert ($V_{ressoll}$) mit dem aus den achsspezifischen Istwerten berechneten Geschwindigkeitswert ($V_{resi}$) verglichen wird, und daß bei unzulässigen Abweichungen ein Störsignal ausgegeben wird.

2. Geschwindigkeitsüberwachungssystem nach Anspruch 1, dadurch gekennzeichnet, daß zusätzlich die achsspezifischen Werte für Weg und/oder Beschleunigung in raumfeste Werte rücktransformiert und mit vorgegebenen Größen verglichen werden.

**Claims**

1. Velocity control system for industrial robots or the like, in which the robot control system converts a robot velocity reference value, defined in fixed spatial coordinates, into axis-specific command values for each of the robot's axis drives, and in which means are provided to stop the drives in the event of a maximum permissible robot motion velocity being exceeded, characterised in that the system has a back transform module (11) to which are supplied the command values ($\Delta\alpha_n/\Delta T$) generated by the robot control system (10) and the resultant actual values, in that the velocity values, correlated by an inverse transform to the fixed spatial coordinate system (x, y, z), are calculated and compared with the maximum permissible motion velocity ($V_{per}$), in that the velocity value ($V_{resref}$), calculated from the axis-specific command value ($\Delta\alpha_n/\Delta T$) is compared with the velocity value calculated from the axis-specific actual values ($V_{resi}$), and in that an error signal is emitted in the event of non-permissible deviations.

2. Velocity control system as in Claim 1, characterised in that, in addition, the axis-specific values for displacement and/or acceleration are transformed back into fixed spatial values and compared with predetermined values.

**Revendications**

1. Système de contrôle de la vitesse pour des robots industriels ou analogues, dans lesquels le dispositif de commande du robot transforme une valeur de consigne de la vitesse du robot, prédéterminée dans des coordonnées fixées dans l'espace, en des instructions de valeurs de consigne, spécifiques pour les axes, pour différents dispositifs d'entraînement du robot suivant les axes, système dans lequel il est prévu des moyens permettant d'arrêter les dispositifs d'entraînement lors du dépassement d'une vitesse maximale admissible de déplacement du robot, caractérisé par le fait qu'il est prévu un module de transformation inverse (11), auquel sont envoyées des instructions de valeurs de consigne ($\Delta d_n/\Delta T$) délivrées par le dispositif (10) de commande du robot, et les valeurs réelles qui en résultent, que les valeurs de vitesse rapportées par une transformation inverse au système de coordonnées (x, y, z) fixe dans l'espace sont calculées et sont comparées aux vitesses de déplacement maximales admissibles ($V_{autorisée}$), que la valeur de la vitesse ($V_{consigne\ résultante}$), calculée à partir de l'instruction de valeur de consigne ($\Delta d_n/\Delta T$) spécifique à l'axe, est comparée à la valeur de vitesse ($V_{réelle\ résultante}$) calculée à partir des valeurs réelles spécifiques aux axes, et qu'un signal de perturbation est délivré dans le cas d'écarts inadmissibles.

2. Système de contrôle de la vitesse suivant la revendication 1, caractérisé par le fait qu'en outre les valeurs, spécifiques pour les axes, de la course et/ou de l'accélération sont transformées de façon inverse en des valeurs fixes dans l'espace et sont comparées à des grandeurs prédéterminées.